# EUROPÄISCHE PATENTANMELDUNG

(11) **EP 1 887 647 A1**
(43) Veröffentlichungstag der Anmeldung: **13.02.2008**
(21) Anmeldenummer: 07013339.2
(22) Anmeldetag: 07.07.2007
(51) Int. Cl.: H01M 8/10

(54) **Direkt-Alkohol-Brennstoffzellenstapel mit einem Kohlendioxidabscheider**

(30) Priorität: 09.08.2006 DE 102006037148
(71) Anmelder: Forschungszentrum Jülich GmbH, 52425 Jülich (DE)
(72) Erfinder: Stähler, Markus, 52349 Düren (DE); Schlumbohm, Carola, 40721 Hilden (DE)

(57) **Zusammenfassung**

Die Erfindung betrifft einen Direkt-Alkohol-Brennstoffzellenstapel umfassend wenigstens zwei Direkt-Alkohol-Brennstoffzellen, mit Anodensammelleitungen (1 - 4) zur Zu- und Abführung des Betriebsmittels zu und von den einzelnen Brennstoffzellen, wobei die Anodensammelleitungen zumindest teilweise als Kreislaufführung (2, 3, 5) angeordnet sind. Erfindungsgemäß ist ein Teil der Anodensammelleitung innerhalb der Kreislaufführung porös ausgebildet (6), und weist ein den porösen Teil umschließenden Raum (10) mit einer Abfuhrleitung (7) für ein Gas auf. Der für Gase aber nicht für Flüssigkeiten durchlässige poröse Teil der Anodensammelleitung dient vorteilhaft als lageunabhängiger Kohlendioxidabscheider.

## Beschreibung

Die Erfindung betrifft einen Brennstoffzellenstapel, insbesondere einen aus Direkt-Alkohol-Brennstoffzellen, welcher ein Mittel zur Abtrennung von gasförmigem Kohlendioxid aus dem anodenseitig entstehenden Flüssig/Gasgemisch aufweist.

### Stand der Technik

Aus DE 196 25 621 A1 ist ein Brennstoffzellenstapel aus Direkt-Methanol-Brennstoffzellen bekannt, der mit gasförmigem Brennstoff betrieben wird. Dem Stack ist dazu ein Verdampfer vorgeschaltet und ein Kondensator nachgeschaltet. In dem Kondensator wird das anodenseitig entstandene CO₂ aus dem Anodenabgas entfernt, bevor es wieder dem Verdampfer zugeführt wird.

In DE 100 44 081 A1 wird eine Direkt-Methanol-Brennstoffzellenanlage (Direkt-Methanol-Brennstoffzelle) beschrieben, bei der das Kohlendioxid heiß aus dem Anodenabgas entfernt wird. Dabei wird der mit dem Kohlendioxid zusammen abgetrennte gasförmige Brennstoff im Gegenstrom mit kaltem Wasser, das im Kondensator des Kathodenabgases gewonnen wird, abgereichert und das wärmere Wasser der Anodenflüssigkeit beigemischt. Bei der zugehörigen Anlage ist wenigstens für die Anodenflüssigkeit ein Kühler mit nachfolgendem CO₂-Abscheider vorgesehen und eine Einheit zur Rektifikation vorhanden, mit der dort enthaltener Brennstoff abgetrennt und in den Brennstoffkreislauf zurückgeführt wird.

### Aufgabe und Lösung

Die Aufgabe der Erfindung ist es, ein Direkt-Alkohol-Brennstoffzellensystem zur Verfügung zu stellen, bei dem das anodenseitig entstehende Kohlendioxid auf einfache Weise aus dem Anodenkreislauf abgetrennt werden kann, und welches gleichzeitig eine von der Lage des Brennstoffzellensystems unabhängige Entfernung des Kohlendioxids ermöglicht.

Die Aufgabe der Erfindung wird gelöst durch einen Direkt-Alkohol-Brennstoffzellenstapel mit einem Anodenkreislauf gemäß Hauptanspruch sowie durch ein Verfahren zum Betreiben eines Direkt-Alkohol-Brennstoffzellenstapels gemäß Nebenanspruch. Vorteilhafte Ausführungsformen des Brennstoffzellenstapels und des Verfahrens finden sich in den jeweils darauf rückbezogenen Ansprüchen wieder.

### Gegenstand der Erfindung

Im Rahmen der Erfindung wurde gefunden, dass eine lageunabhängige und einfach ausgestaltete CO₂-Abtrennung aus dem anodenseitigen Zweiphasengemisch eines Direkt-Alkohol-Brennstoffzellensystems durch eine poröse Leitungsstrecke verwirklicht werden kann. Dabei wird ein Teil der anodenseitigen Leitung eines Direkt-Alkohol-Brennstoffzellenstapels, insbesondere ein Teil der anodenseitigen Kreislaufführung des Betriebsmittels derart porös ausgestaltet, dass während des Durchströmens dieses Teils mit dem während des Betriebs entstehenden Zweiphasengemisch aus wässrigem Betriebsmittel und CO₂, das gasförmig vorliegende CO₂ durch die Poren entweichen kann, während das wässrige Betriebsmittel ungehindert weiter durch die Leitung strömt.

Als geeignete poröse Materialien, die für den Durchtritt von gasförmigem CO₂ geeignet sind, sind vor allem solche zu nennen, die von dem verwendeten wässrigen Betriebsmittel regelmäßig nicht benetzt werden. Da es sich bei den Betriebsmitteln in der Regel um wässrige Alkoholmischungen handelt, sind daher insbesondere entsprechend poröse hydrophobe Materialien, wie z. B. Polytetrafluorethylen (PTFE) geeignet.

Das poröse Material sollte einen Luftleitwert von bis zu 1 1/(s*cm²*bar) bei Wasserdruckverträglichkeiten von bis zu 0,4 bar aufweisen. Bei einer Fläche von 10 cm² und typischen Volumenströmen von 10 l/min Kohlendioxid bei akzeptablen Druckabfällen von 0,1 bar liegen die typischen Werte für den Luftleitwert des porösen Materials bei 0,17 1/(s*cm²*bar).

Der Luftleitwert beschreibt die Durchlässigkeit eines porösen Werkstoffes gegenüber Luft oder anderen Gasen. Der Luftleitwert lässt sich über das Design und die Fertigungsmethode in weiten Bereichen gezielt und reproduzierbar einstellen. Der Luftleitwert hängt insbesondere von der Dicke der porösen Schicht im Anodenkreislauf und dem mittleren Porendurchmesser dieser Schicht ab.

Die mittleren Porendurchmesser liegen typischerweise zwischen 1 und 200 µm, die Materialstärken zwischen 0,1 und wenigen mm, während die Größe der Austauschflächen sich jeweils nach dem verwendeten System richtet.

Das aus dem Zweiphasengemisch durch die Poren hindurchtretende CO₂ wird in einem, den porösen Bereich der Leitung gasdicht umhüllenden, Raum aufgefangen und kann anschließend wie gehabt über Leitungen weiter abgeführt werden.

Für den Durchtritt des gasförmigen CO₂ aus dem Zweiphasengemisch durch das poröse Material ist regelmäßig nur ein geringer Überdruck des Betriebsmittels, bzw. des dann als Zweiphasengemisch vorliegenden Betriebsmittels, gegenüber dem den porösen Bereich umhüllenden Raum erforderlich. Nach ersten Versuchen ist beispielsweise schon ein Überdruck von 0,1 bar ausreichend, um den größten Teil des gasförmig vorliegenden CO₂ aus dem Zweiphasengemisch zu entfernen.

In einer besonderen Ausgestaltung ist der poröse Bereich in Form der übrigen Kreislaufleitung ausgestaltet, d. h. als ein zylinderförmiges Teilstück mit identischem Innendurchmesser wie die Kreislaufleitung. Diese Form ist aber nicht zwingend erforderlich. Es kann auch eine Ausgestaltung der Art sein, dass in dem porösen Teil eine Strömungsminderung oder Beschleunigung erwünscht ist, die beispielsweise durch einen größeren oder kleineren Strömungsquerschnitt erzielt werden kann. Auch eine rotationssymmetrische Anordnung ist nicht zwingend erforderlich.

Der erfindungsgemäße Teil der anodischen Kreislaufführung sollte der Entfernung des CO₂ strömungstechnisch Rechnung tragen, z. B. dadurch, dass ein großer Teil des Volumens des Zweiphasengemisches aus dieser beim Durchlaufen des porösen Bereiches entfernt wird.

Vorteilhaft könnte sich im Anschluss an diesen porösen Bereich auch ein geringerer Leitungsquerschnitt für die übrige anodische Kreislaufführung anbieten, da sich das Volumen des anodischen Betriebsmittels nach Abtrennung des CO₂ deutlich reduziert.

Die Effizienz der CO₂.Entfernung hängt bei dem erfindungsgemäßen Verfahren unter anderem auch von der Strömungsgeschwindigkeit in der Leitung (dynamischer Druck), dem Volumenanteil an gasförmigem CO₂ in dem Zweiphasengemisch sowie von der Fläche des porösen Bereiches ab.

Der Vorteil der Erfindung liegt zum einen in der einfachen Bauart des CO₂-Abscheiders begründet, und zum anderen in seiner Lageunabhängigkeit.

Der poröse Bereich könnte beispielsweise zusammen mit dem diesen Bereich umhüllenden Raum als komplette Einheit hergestellt werden, die bei Bedarf einfach an geeigneter Stelle der anodischen Kreislaufführung eingesetzt wird.

Der für Gase, aber nicht für Flüssigkeiten, durchlässige poröse Teil der Anodensammelleitung dient somit vorteilhaft als lageunabhängiger und einfach einzubauender Kohlendioxidabscheider.

### Spezieller Beschreibungsteil

Nachfolgend wird der Gegenstand der Erfindung anhand von zwei Figuren näher erläutert, ohne dass der Gegenstand der Erfindung dadurch beschränkt wird.

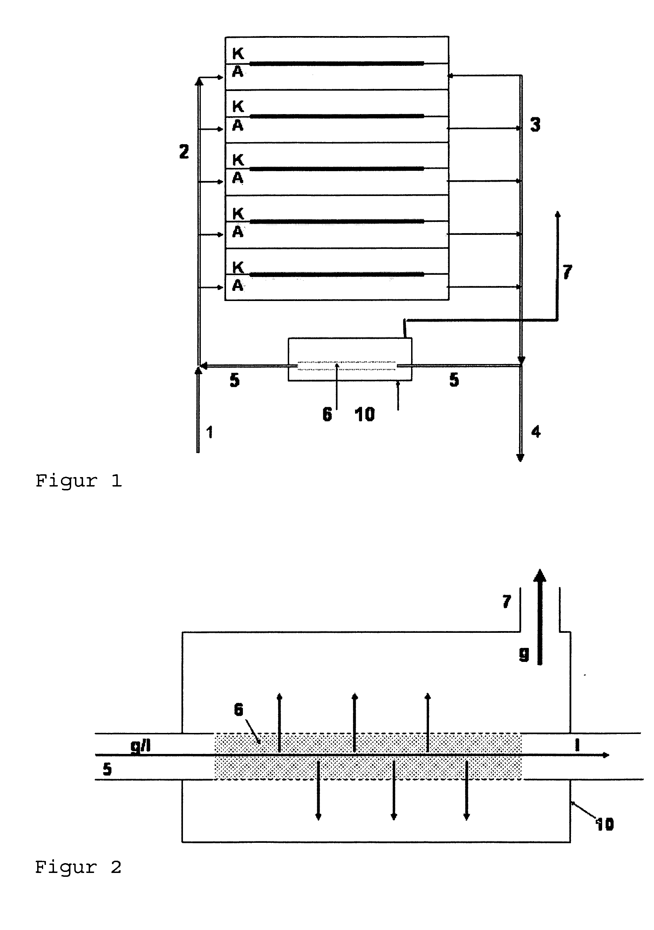

Es zeigt die Figur 1 eine schematische Anordnung eines erfindungsgemäßen Brennstoffzellenstapels mit mehreren Brennstoffzellen. In Figur 1 werden die einzelnen Brennstoffzellen einzeln über externe Leitungen (1, 2) mit dem anodischen Betriebsmittel versorgt. Der Übersichtlichkeit halber wurden nur die anodischen Leitungen eingetragen. Das abgereicherte anodische Betriebsmittel, welches nach dem Durchlaufen der Zellen mit CO₂ angereichert ist (3, 4), wird gesammelt und zumindest teilweise im Kreislauf (5) geführt. Innerhalb der Kreislaufführung (2, 3, 5) wird ein Teil der Leitung durch einen porösen Bereich (6) ersetzt, in diesem Fall durch einen aus einem porösen Material bestehenden Leitungsabschnitt. Um diesen porösen Bereich ist gasdicht an die Leitung ein umhüllender Raum (10) angeordnet, in dem sich das durch den porösen Bereich hindurchtretende gasförmige CO₂ sammelt und über eine Abgasleitung (7) abgeleitet wird.

## Patentansprüche

1. Direkt-Alkohol-Brennstoffzellenstapel umfassend wenigstens zwei Direkt-Alkohol-Brennstoffzellen, mit Anodensammelleitungen (1-4) zur Zu- und Abführung des Betriebsmittels zu und von den einzelnen Brennstoffzellen, wobei die Anodensammelleitungen zumindest teilweise als Kreislaufführung (2,3,5) angeordnet sind,
**dadurch gekennzeichnet,**
**dass** ein Teil der Anodensammelleitung innerhalb der Kreislaufführung (8-9) porös ausgebildet ist und ein, den porösen Teil umschließenden, Raum (10) mit einer Abfuhrleitung (7) für ein Gas angeordnet ist.

2. Direkt-Alkohol-Brennstoffzellenstapel nach Anspruch 1, bei dem der poröse Teil der Anodensammelleitung aus einem Material besteht, welches durch Alkohol nicht benetzt wird.

3. Direkt-Alkohol-Brennstoffzellenstapel nach Anspruch 1 oder 2, bei dem der poröse Teil der Anodensammelleitung aus Polytetrafluorethylen (PTFE) besteht.

4. Direkt-Alkohol-Brennstoffzellenstapel nach Anspruch 1 bis 3, bei dem der poröse Teil der Anodensammelleitung einen Luftleitwert > 0 bis 1 1/(s*cm²*bar) bei Wasserdruckverträglichkeiten > 0 bis 0,4 bar aufweist.

5. Direkt-Alkohol-Brennstoffzellenstapel nach Anspruch 1 bis 4, bei dem der poröse Teil der Anodensammelleitung mittlere Porengrößen im Bereich von 1 bis 200 µm aufweist

6. Direkt-Alkohol-Brennstoffzellenstapel nach Anspruch 1 bis 5, bei dem der poröse Teil der Anodensammelleitung von einer äußeren Begrenzung umgeben ist, die durchtretendes CO₂ zu sammeln und weiter zu leiten vermag.

7. Verfahren zum Betreiben eines Direkt-Alkohol-Brennstoffzellenstapels nach einem der Ansprüche 1 bis 6, bei dem während des Betriebs ein Zweiphasengemisch durch den als Kreislauf ausgebildeten Teil der Anondensammelleitung strömt,
**dadurch gekennzeichnet,**
**dass** wenigstens ein Teil des Gases des Zweiphasengemischs durch den porösen Teil durchtritt, und so aus dem Zweiphasengemisch entfernt wird.

8. Verfahren nach Anspruch 7, bei dem als Gas Kohlendioxid aus dem Zweiphasengemisch entfernt wird.

9. Verfahren nach einem der Ansprüche 7 bis 8, bei dem ein Überdruck von 0,1 bar oder mehr des Zweiphasengemisches gegenüber dem den porösen Bereich umhüllenden Raum eingestellt wird.
